# FASCICULE DE BREVET EUROPEEN

(11) **EP 1 285 714 B1**
(45) Date de publication et mention de la délivrance du brevet: **06.07.2011**
(21) Numéro de dépôt: 02292079.7
(22) Date de dépôt: 22.08.2002
(51) Int. Cl.: B23C 3/18, F01D 5/34

(54) **Procédé de fabrication d'un disque aubagé monobloc de rotor et disque correspondant**
Beschaufelte Rotorscheibe und deren Herstellungsverfahren
Turbine rotor disc and manufacturing method thereof

(30) Priorité: 23.08.2001 FR 0111022
(43) Date de publication de la demande: 26.02.2003
(73) Titulaire: SNECMA, 75015 Paris (FR)
(72) Inventeur: Bourgy, Joel, 77550 Moissy-Cramayel (FR); David, Jean-Pierre André Denis, 77810 Thomery (FR); Derrien, Stéphane Jean-Daniel, 92100 Boulogne Billancourt (FR); Maleville, Thierry Jean, 91490 Milly La Foret (FR)
(74) Mandataire: Ilgart, Jean-Christophe

(56) Documents cités:
- EP-A- 0 666 407
- EP-A- 0 992 310
- FR-A- 980 201
- GB-A- 1 248 246

## Description

Cette invention se rapporte avant tout à un procédé de fabrication d'un disque aubagé monobloc de rotor, et aussi à des disques de forme caractéristique que donnent ce procédé.

La discussion portera sur l'usinage des aubes du disque à partir d'une forme pleine constituée par le disque à l'état brut. Un usinage préliminaire du disque par une fraise de grand rayon permet d'entailler le disque en laissant subsister des ébauches des aubes qu'on doit usiner plus finement jusqu'à la forme définitive. Il est habituel de recourir au fraisage, et surtout à des fraises de forme spéciale, de forme conique et qui s'amenuisent vers un bout arrondi permettant d'effectuer des usinages de grande précision.

Un procédé connu est un fraisage en bout où l'axe de rotation de la fraise est orienté radialement au disque et tourne autour de chacune des aubes en s'enfonçant progressivement vers la jante du disque, usinant l'aube par une trajectoire hélicoïdale. L'axe de rotation de la fraise est en réalité légèrement incliné de manière à être éloigné de l'aube usinée et à faire l'usinage essentiellement par le bout arrondi de la fraise. La hauteur de passe, c'est-à-dire le pas de l'hélice, est d'environ ½ mm, de sorte qu'une aube n'est achevée d'usiner qu'après quelques centaines de passes. Ce procédé est donc assez long, ce qui limite la hauteur des aubes auxquelles il peut s'appliquer.

Il a été aussi conçu un procédé de fraisage par le flanc ou fraisage tangentiel avec une fraise de même forme conique et encore arrondie au bout, mais dont la partie conique est plus longue. La fraise est comme précédemment disposée radialement, mais ici l'extrémité de l'aube est fraisée en une seule passe large avec la partie conique, alors que le pied de l'aube est comme précédemment fraisé principalement par le bout de la fraise par petites passes. La passe large permet de gagner du temps par rapport au procédé précédent, même si la vitesse d'avance de l'outil doit être réduite ; mais le fraisage plus rapide s'accompagne de vibrations et de flexions de l'aube qui le rendent encore inapplicable pour des aubes assez hautes. Par ailleurs, ce procédé est plus délicat à mettre en oeuvre en raison du risque de creusement de l'aube que pourrait produire un supplément d'usinage involontaire par la partie conique sur une portion déjà usinée.

On a donc cherché, en concevant cette invention, un procédé plus commode de fabrication par fraisage d'un disque aubagé monobloc. Le procédé proposé ici est rapide et s'applique à des aubes de toutes hauteurs. Il présente l'inconvénient de donner des surfaces d'aube à facettes, d'aspect plus grossier et donnant un moins bon écoulement, mais il a été constaté que la perte de rendement correspondante pouvait être rendue très faible en n'acceptant que des irrégularités modérées.

Sous sa forme la plus générale, l'invention concerne ainsi un procédé de fabrication d'un disque aubagé monobloc de rotor, caractérisé en ce qu'il consiste, après avoir entaillé le disque à un état brut pour y former des ébauches d'aubes, à fraiser les ébauches des aubes en fraisage tangentiel par un outil parcourant des passes successives sensiblement radiales par rapport au disque et tourné d'un angle de facettes, dans un plan tangentiel par rapport au disque, après chacune des passes.

Une caractéristique du procédé est que la forme de l'aube résulte essentiellement de l'action de la partie principale (notamment conique) de la fraise plutôt que de son bout arrondi. Les passes sont parallèles et à faible recouvrement ; la hauteur de passe est sensiblement égale à la hauteur de la partie principale de la fraise, soit quelques millimètres. Comme la superficie à fraiser est la même dans tous les procédés, on mesure à quel point le nombre de passes est réduit, et conséquemment le temps d'usinage.

L'outil peut avoir une partie centrale conique, une partie d'extrémité arrondie et une partie de raccordement à un axe de rotation arrondie et s'amenuisant vers l'axe de rotation, la partie centrale s'amenuisant vers la partie d'extrémité, et se raccordant à la partie d'extrémité et à la partie de raccordement de façon lisse, sans former d'arête.

Un avantage important de l'invention est la possibilité de laisser subsister un anneau extérieur joignant les bouts des aubes et qui contribue à les raidir et à les maintenir pendant le fraisage, ce qui réduit énormément les vibrations et les flexions. L'anneau est un vestige du disque à l'état brut et est donc monobloc avec les aubes ; il est séparé d'elles par un usinage final entrepris après que les aubes ont pris leur forme définitive.

Le disque aubagé monobloc caractéristique de l'invention a des faces formées de facettes longilignes sensiblement radiales. Ce disque peut être obtenu par le procédé qu'on vient d'exposer, mais il n'est pas exclu qu'on puisse l'obtenir autrement. Les facettes peuvent être immédiatement jointives, notamment en face d'extrados des aubes, mais elles peuvent être séparées par des portions concaves de raccordement, au moins en face d'intrados, produites essentiellement par des usinages du bout arrondi de la fraise.

On conseille que les facettes aient une largeur au plus égale à 5 mm et des directions faisant des angles inférieurs à 5° pour des facettes voisines, ce qui ne réduit que peu les performances aérodynamiques de l'aube ; on a d'ailleurs constaté qu'au-dessous de 3°, la perte de performances par rapport à une aube parfaitement lisse était négligeable.

L'invention sera maintenant décrite en liaison aux figures suivantes :
- les figures 1 et 2 sont des vues générales des procédés susmentionnés de l'art antérieur,
- les figures 3, 4 et 5 illustrent le procédé de l'invention par des vues d'une portion de disque en usinage dans les trois axes principaux,
- la figure 6 illustre les aubes obtenues, et
- les figures 7 et 8 sont des détails des profils d'aubes.

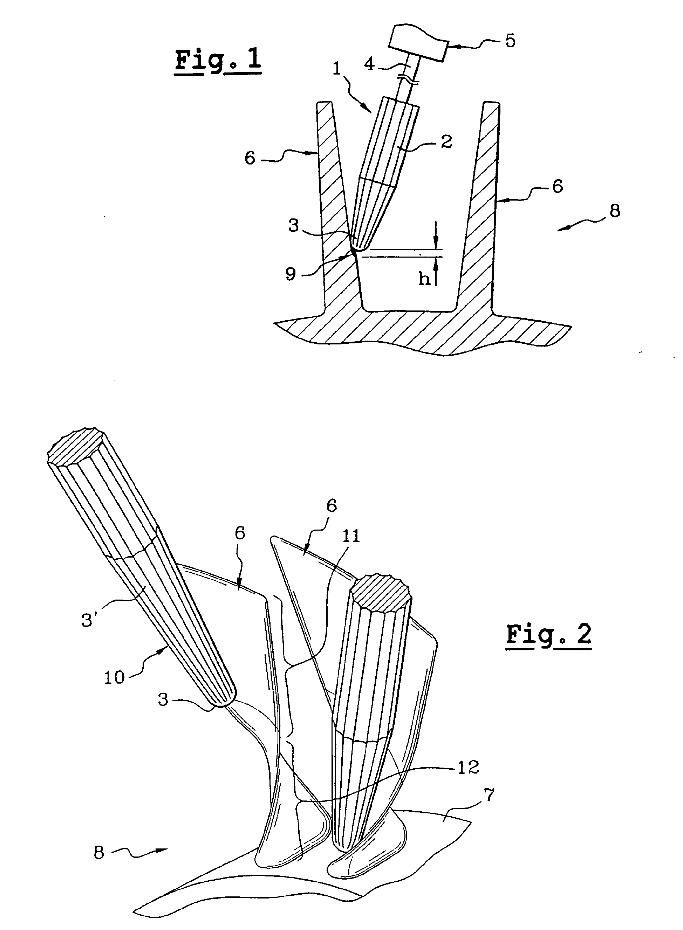

Les fraises traditionnellement utilisées pour usiner des aubes, dont celle qui porte la référence 1 à la figure 1, comprennent une partie principale 2 conique terminée par un bout 3 arrondi et plus précisément hémisphérique ; les portions 2 et 3 sont garnies de dents de coupe, et la fraise 1 tourne autour d'un axe 4 de rotation entraîné par une machine 5 à commande numérique qui n'est pas représentée en détail. Dans le procédé de soudage en bout, ou par la pointe avec un tel outil, qu'on a mentionné en premier, le bout 3 est appliqué sur l'aube 6 composant, avec d'autres aubes semblables et une jante 7, un disque 8 aubagé monobloc en cours d'usinage. L'axe 4 et la fraise 1 ont une orientation sensiblement radiale avec une petite inclinaison tangentielle (d'après les directions principales du disque 8). La fraise 1 est déplacée perpendiculairement à la feuille, exécutant des passes successives à des hauteurs respectives de l'aube 6, séparées par des hauteurs telles que h, la référence 9 désignant la section des copeaux qui seront enlevés à la prochaine passe.

La fraise de la figure 2 se voit attribuer la référence 10 et comprend, entre le bout 3 hémisphérique et l'axe 4 de rotation déjà rencontrés sur la fraise 1 précédente, une partie principale 2' conique de plus grande longueur que la précédente 2. L'aube 6 comprend alors une portion 11 usinée d'un coup par la partie principale 2', la partie complémentaire 12 de l'aube 6, proche de la jante 7, étant usinée par passes successives par le bout 3 de la fraise 10. Ici encore, l'axe 4 est tenu dans une position sensiblement radiale avec une petite inclinaison.

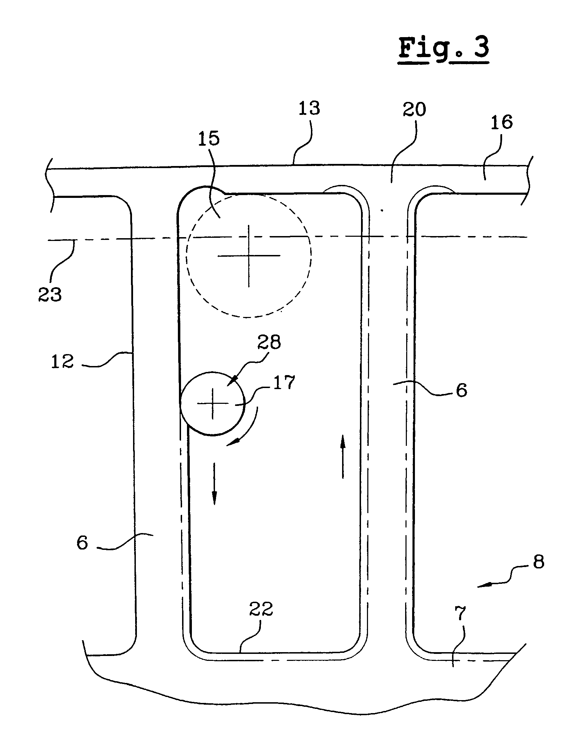

On se reporte maintenant au procédé de l'invention et aux figures 3, 4 et 5. Les aubes à l'état d'ébauche, la jante et le disque portent toujours les références 6, 7 et 8. Le disque à l'état brut est plein et circonscrit dans une circonférence 13 quelque peu supérieure au rayon extérieur des aubes 6 à l'état final.

Une première étape consiste à entailler le disque à l'état brut pour séparer les ébauches des aubes 6. On peut enlever une proportion variable de la matière intermédiaire.

Dans un mode préféré de réalisation, on procède avec une grosse fraise cylindrique ou conique en exécutant des échancrures 14 de profondeur modérée, puis un trou 15 excentré passant non loin de la forme finale d'une des aubes 6, en laissant subsister un anneau 16 à l'extérieur de l'ébauche du disque et qui est destiné à unir les bouts des aubes 6 et à donner un assemblage plus rigide.

L'outil 17 de l'invention peut alors être approché. Il s'agit encore d'une fraise, sur laquelle on peut distinguer trois parties : une partie centrale 18, de forme conique dont l'arête fait un angle de 10° environ avec l'axe, une partie de bout 19 arrondie, une partie de raccordement 20 à l'axe de rotation 21 qui est aussi arrondie, s'amenuisant vers l'axe 21. Les parties 18 et 19 ressemblent aux parties 2 et 3 des outils connus, avec certaines nuances : c'est ainsi que la partie principale 18 est plus courte, ayant 10 mm de hauteur si la fraise 17 est un outil de demi-finition ou 5 mm seulement si c'est un outil de finition ; et la partie de bout 19 n'est pas nécessairement hémisphérique mais aplatie. Les rayons de courbure des parties de bout 19 et de raccordement 20 peuvent être de 10 mm à la jonction avec la partie principale 18 et plus petits ailleurs ; il convient que la génératrice de la fraise 17 soit lisse, c'est-à-dire qu'aucune arête ne soit formée aux jonctions entre les différentes parties. La fraise 17 peut avoir un diamètre maximal de 20 mm.

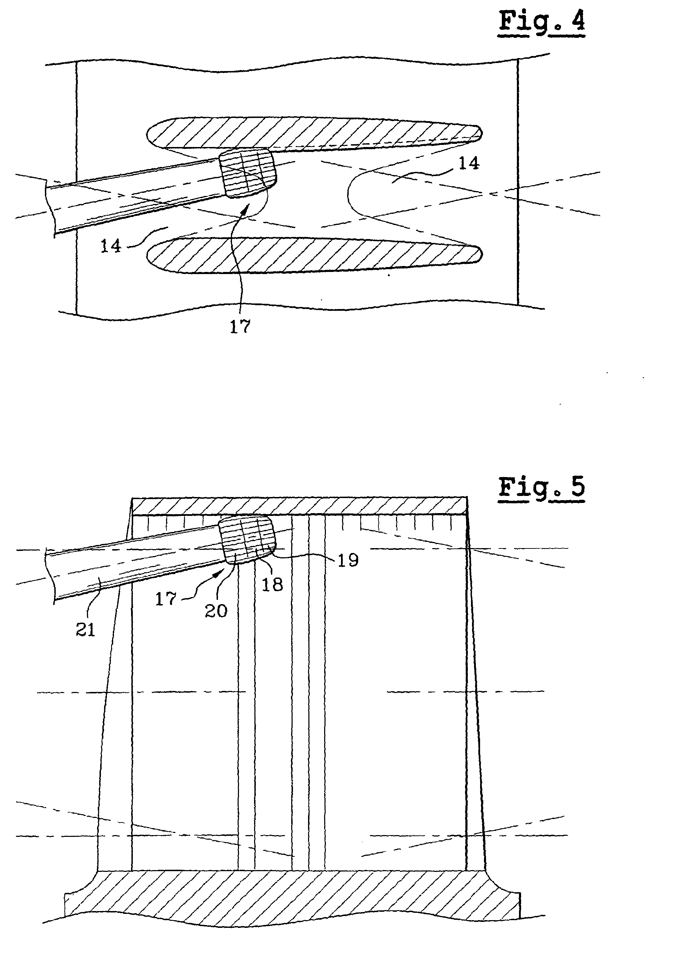

L'axe de rotation 21 est ici dirigé sensiblement dans l'axe du disque 8, avec une petite inclinaison tangentielle comme le montre la figure 4 ou radiale comme le montre la figure 5. Ces inclinaisons sont essentiellement imposées pour corriger la conicité de la partie principale 18 et obtenir des surfaces usinées dans la direction voulue. La conicité a l'avantage que le fraisage est accompli avec l'axe de rotation 21 éloigné de la surface fraisée ; l'inclinaison tangentielle est observée pour fraiser les aubes 6 proprement dites et la fraise 17 est inclinée dans un plan sensiblement radial pour la jante 7 ou l'anneau 16, aux extrémités des passes 22. Les passes sont parallèles et verticales le long des aubes 6 ; on voit à la figure 3 qu'elles commencent devant le trou 15 et peuvent s'effectuer sur un contour fermé autour d'un entre-deux d'aubes, en descendant le long d'une des aubes 6, puis en remontant le long de la face opposée de l'aube 6 voisine après avoir longé la jante 7, pour s'achever sur l'anneau 16. Les bandes usinées à chaque passe portent la référence 22 aux figures 3 et 5 ; leur largeur correspond sensiblement à la hauteur de la partie principale 18 qui exécute la plus grande partie du travail d'usinage et impose presque à elle seule la forme finale de l'aube 6. On est donc en présence d'un fraisage presque purement tangentiel, contrairement aux conceptions précédentes. Le fraisage est produit d'abord par un outil de demi-finition, puis par un outil de finition qui sont tous deux conformes à la description de la fraise 17, sauf que la partie principale 18 du second est plus basse.

La fraise 17 parcourt les passes 22 successivement en étant à chaque fois enfoncée plus profondément dans les échancrures 14. Elle est tournée d'un angle de facettes, au plus égal à 5°, dans un plan tangentiel au disque 8 entre deux passes 22. Quand toutes les aubes 6 du disque 8 ont été usinées, l'anneau 16 peut être retiré : les ébauches des aubes 6 sont pour cela coupées à leurs extrémités, en installant un fil 23 d'une machine à électro-érosion sur elles. Quand les bords d'attaque et de fuite des aubes 6 ont été usinés, d'une façon qu'on ne décrira pas puisque l'invention n'apporte pas de perfectionnement en cela, la forme définitive des aubes 6 est obtenue.

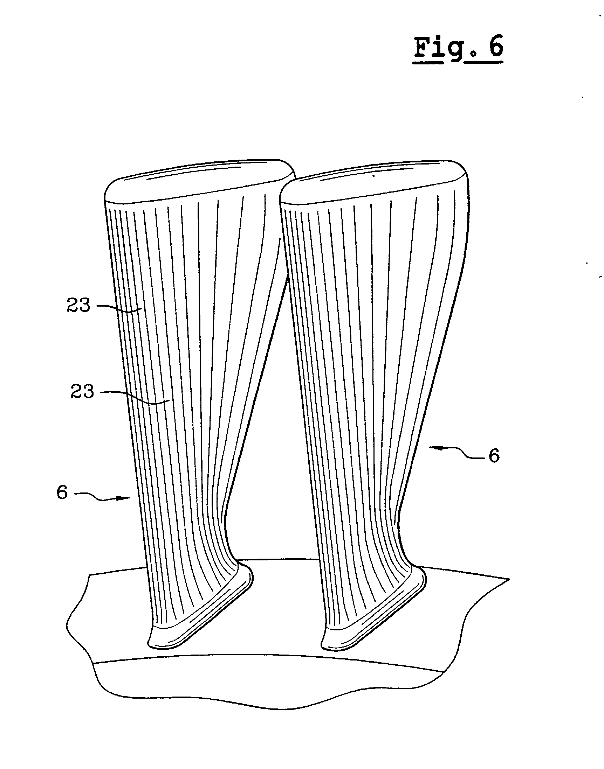

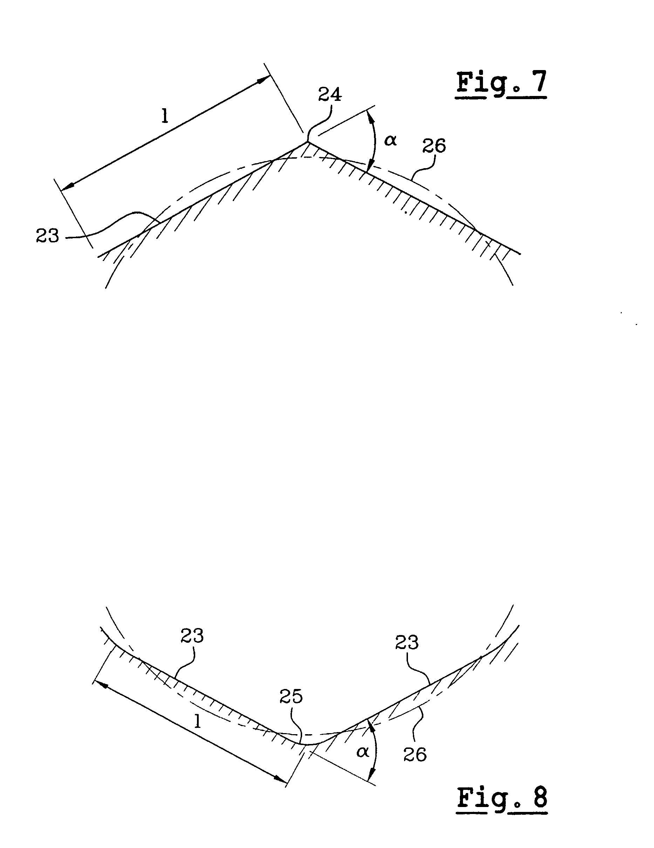

La figure 6 représente l'aspect des surfaces d'aubes 6 : les passes font chacune apparaître une facette 23 longiligne comme le montre la figure 7, les facettes 23 consécutives sur la face d'extrados des aubes 6 sont séparées par un angle vif 24, alors que les facettes 23 de la surface d'intrados se raccordent par une concavité 25 produite par des fraisages par la partie de bout 19. Dans les deux cas, il est préconisé que les variations de direction de facettes 23 voisines soient inférieures à 3°, ce qui permet de ne pas subir de pertes de rendement aérodynamique supérieures à 0,01% environ, ni de surcroît d'échauffement d'air à travers le disque 8 supérieur à 0,1°C ; des variations d'angle allant jusqu'à 5° environ peuvent être admises en pratique. La distance entre le profil lisse 26 conçu pour l'aube 6 et le profil réel ne dépasse alors pas la faible valeur de 0,02 mm pour des facettes 23 de 5 mm de largeur. Des pertes encore moindres seraient constituées avec des facettes 23 plus étroites, obtenues avec une fraise plus courte, mais avec un nombre de passes plus grand.

L'anneau 16 de maintien n'est nullement obligatoire à une bonne réalisation de l'invention, mais il faut se prémunir contre les risques de flexion vibratoire et statique des aubes 6 pendant le fraisage, en évitant d'exciter les aubes 6 aux fréquences de résonance et peut-être en ajustant la position de l'outil d'après la déflexion des aubes 6, qui varie avec la distance à la jante 7.

## Revendications

1. Procédé de fabrication d'un disque (8) aubagé monobloc de rotor, **caractérisé en ce qu'**il consiste, après avoir entaillé le disque à un état brut pour y former des ébauches d'aubes (6), à fraiser les ébauches des aubes en fraisage tangentiel par un outil (17) parcourant des passes (22) successives sensiblement radiales par rapport au disque et tourné d'un angle de facettes, dans un plan tangentiel par rapport au disque, après chacune des passes.

2. Procédé de fabrication d'un disque aubagé selon la revendication 1, **caractérisé en ce que** l'outil a une partie centrale (18) conique, une partie d'extrémité (19) arrondie et une partie de raccordement (20) à un axe de rotation arrondie et s'amenuisant vers l'axe de rotation (21), la partie centrale s'amenuisant vers la partie d'extrémité, et se raccordant à la partie d'extrémité et à la partie de raccordement sans former d'arête.

3. Procédé de fabrication d'un disque aubagé selon l'une quelconque des revendications 1 ou 2, **caractérisé en ce que** les passes s'étendent d'une jante (7) du disque à un anneau (16) de maintien extérieur reliant les ébauches des aubes, et **en ce que** l'anneau est séparé des aubes après que les ébauches des aubes (6) ont été fraisées.

4. Procédé de fabrication d'un disque aubagé selon la revendication 3, **caractérisé en ce que** l'anneau est séparé des aubes par une électro-érosion à fil (23).

5. Procédé de fabrication d'un disque aubagé selon l'une quelconque des revendications 1 à 4, **caractérisé en ce que** l'outil (17) est incliné dans un plan sensiblement radial à au moins une des extrémités des passes.

6. Procédé de fabrication d'un disque aubagé selon l'une quelconque des revendications 1 à 5, **caractérisé en ce que** les ébauches des aubes sont fraisées complètement deux fois, l'outil (17) étant un outil de demi-finition puis un outil de finition.

7. Procédé de fabrication d'un disque aubagé selon les revendications 2 et 6, **caractérisé en ce que** l'outil de demi-finition a une partie centrale (18) plus haute que l'outil de finition.

8. Disque (8) aubagé monobloc, **caractérisé en ce qu'**il comprend des aubes (6) ayant des faces formées de facettes (23) longilignes sensiblement radiales.

9. Disque aubagé monobloc selon la revendication 8, **caractérisé en ce que** les facettes sont séparées par des portions concaves de raccordement (25) au moins aux faces d'intrados.

10. Disque aubagé monobloc selon l'une quelconque des revendications 8 ou 9, **caractérisé en ce que** les facettes ont des directions faisant des angles inférieurs à 5°, et de préférence inférieurs à 3°, et des largeurs au plus égales à 5 mm.

## Claims

1. A method of manufacturing a blisk (8) for a rotor, **characterized in that** it consists, after having cut a disk at a rough state to form blade (6) blanks therein, in milling said blade banks by tangential milling using a tool (17) running in substantially radial passes (22) with respect to said disk, said tool being turned through a facet angle with respect to said disk in a plane tangential to said disk.

2. A method of manufacturing a blisk according to claim 1, **characterized in that** said tool has a conical central part (18), a roughed end part (19) and a rounded part (20) for connection to a rotation spindle, which part tapers toward said rotation spindle (21), said central part tapering toward said end part and connecting to said end part and to said connection part without forming a ridge.

3. A method of manufacturing a blisk according to any of claims 1 or 2, **characterized in that** said passes run from a hub (7) of the blisk to an outer holding annulus (16) connecting said blade blanks, and said annulus is parted from the blades after said blades (6) blanks have been milled.

4. A method of manufacturing a blisk according to claim 3, **characterized in that** said annulus is parted from said blades by wire (23) electrical discharge machining.

5. A method of manufacturing a blisk as according to any of claims 1 to 4, **characterized in that** said tool (17) is inclined in a substantially radial plane at least at one of the ends of said passes.

6. A method of manufacturing a bliss according to any of claims 1 to 5, **characterized in that** the blade blanks are each milled completely twice, said tool (17) being a part-finishing tool, then a finishing tool.

7. A method of manufacturing a blisk according to claims 2 and 6, **characterized in** said part-finishing tool has a taller central part than said finishing tool.

8. A blisk **characterized in that** it comprises blades (6) having faces formed of substantially radial longilinear facets (23).

9. A blisk according to claim 8, **characterized in that** said facets are separated by concave connecting portions (25) at least on pressure faces.

10. A blisk according to any of claims 8 or 9, **characterized in that** the facets have directions that subtend angles smaller than 5° and preferably smaller than 3° and said facets have widths at most equal to 5 mm.

## Patentansprüche

1. Verfahren zur Herstellung einer beschaufelten Rotoreinblockscheibe (8),
**dadurch gekennzeichnet, dass** es darin besteht, nach dem Einschneiden der Scheibe in einem Rohzustand, um dort Rohlinge von Schaufeln (6) zu bilden, die Rohlinge der Schaufeln in tangentialem Fräsen durch ein Werkzeug zu fräsen, das aufeinanderfolgende, im Wesentlichen radiale Durchläufe (22) bezüglich der Scheibe durchläuft und um einen Winkel von Facetten in einer tangentialen Ebene bezüglich der Scheibe nach jedem der Durchlauf gedreht wird.

2. Verfahren zur Herstellung einer beschaufelten Scheibe nach Anspruch 1,
**dadurch gekennzeichnet, dass** das Werkzeug einen konischen zentralen Teil (18), einen abgerundeten Endteil (19) und einen Anschlussteil (20) mit einer abgerundeten Rotationsachse hat, der zur Rotationsachse (21) hin abnimmt, wobei der zentrale Teil zu dem Endteil hin abnimmt und sich an den Endteil und an den Anschlussteil anschließt, ohne einen Grat zu bilden.

3. Verfahren zur Herstellung einer beschaufelten Scheibe nach einem der Ansprüche 1 oder 2, **dadurch gekennzeichnet, dass** sich die Durchläufe von einer Felge (7) der Scheibe zu einem äußeren Haltering (16) erstrecken, der die Rohlinge der Schaufeln verbindet, und dass der Ring von den Schaufeln getrennt wird, nachdem die Rohlinge der Schaufeln (6) gefräst worden sind.

4. Verfahren zur Herstellung einer beschaufelten Scheibe nach Anspruch 3,
**dadurch gekennzeichnet, dass** der Ring von den Schaufeln durch eine Drahtelektroerosion (23) getrennt wird.

5. Verfahren zur Herstellung einer beschaufelten Scheibe nach einem der Ansprüche 1 bis 4, **dadurch gekennzeichnet, dass** das Werkzeug (17) in einer Ebene im Wesentlichen radial zu wenigstens einem der Enden der Durchläufe geneigt ist.

6. Verfahren zur Herstellung einer beschaufelten Scheibe nach einem der Ansprüche 1 bis 5, **dadurch gekennzeichnet, dass** die Rohlinge zweimal vollständig gefräst werden, wobei das Werkzeug (17) ein Halbfertigbearbeitungswerkzeug, dann ein Fertigbearbeitungswerkzeug ist.

7. Verfahren zur Herstellung einer beschaufelten Scheibe nach den Ansprüchen 2 und 6, **dadurch gekennzeichnet, dass** das Halbfertigbearbcitungswerkzeug einen höheren zentralen Teil (18) als das Fertigbearbeitungswerkzeug hat.

8. Beschaufelte Einblockscheibe (8), **dadurch gekennzeichnet, dass** sie Schaufeln (6) mit Seiten aufweist, die aus langgezogenen, im Wesentlichen radialen Facetten (23) gebildet sind.

9. Beschaufelte Einblockscheibe nach Anspruch 8, **dadurch gekennzeichnet, dass** die Facetten durch konkave Abschnitte (25) zum Anschluss wenigstens an die Unterseiten von Innenflächen getrennt sind.

10. Beschaufelte Einblockscheibe nach einem der Ansprüche 8 oder 9, **dadurch gekennzeichnet, dass** die Facetten Richtungen, die Winkel unter 5 % und bevorzugt unter 3% sowie Breiten höchstens gleich 5 mm bilden.
